# EUROPÄISCHE PATENTANMELDUNG

(11) **EP 4 063 012 A1**
(43) Veröffentlichungstag der Anmeldung: **28.09.2022**
(21) Anmeldenummer: 21164243.4
(22) Anmeldetag: 23.03.2021
(51) Int. Cl.: B01J 25/00, B01J 25/02, B01J 37/00, B01J 37/08, C22C 19/00

(54) **BESCHICHTETE METALLKÖRPERZUSCHNITTE UND VERFAHREN ZU IHRER HERSTELLUNG**

(71) Anmelder: Evonik Operations GmbH, 45128 Essen (DE)
(72) Erfinder: ROOS, Meike, 63654 Büdingen (DE); BERWEILER, Monika, 63477 Maintal (DE); GÖTTLINGER, Markus, 63517 Rodenbach (DE); POSS, René, 76187 Karlsruhe (DE)
(74) Vertreter: Evonik Patent Association

(57) **Zusammenfassung**

Die vorliegende Erfindung betrifft Verfahren zur Herstellung von Metallkörperzuschnitten, die das Bereitstellen von Metallkörpern, das anschließende Aufbringen metallhaltiger Pulver, sowie eine thermische Behandlung zur Legierungsbildung und das Zertrennen der legierten Metallkörper mit einem Verfahren ausgewählt aus der Gruppe Zerteilen, Spanen mit geometrisch bestimmter Schneide und Wasserstrahlschneiden, umfassen. Das Temperaturprofil der thermischen Behandlung ermöglicht es, dass an der Kontaktfläche zwischen Metallkörper und metallhaltigem Pulver Legierungsbildung stattfindet, aber gleichzeitig unlegierte Bereiche im Inneren des Metallkörpers verbleiben. Die vorliegende Erfindung betrifft ferner Verfahren, bei denen sich an das Zertrennen der legierten Metallkörper eine Behandlung mit Auslaugmittel anschließt, so dass katalytisch aktive Metallkörper erhalten werden. Durch den Einsatz der erfindungsgemäßen Trennverfahren für die Herstellung der Metallkörperzuschnitte werden besonders aktive Katalysatoren erhalten. Die vorliegende Erfindung betrifft ferner die Verwendung der nach den erfindungsgemäßen Verfahren erhaltenen Katalysatoren für chemische Transformationen.

## Beschreibung

### Hintergrund

Die vorliegende Erfindung betrifft Verfahren zur Herstellung von Metallkörperzuschnitten, die das Bereitstellen von Metallkörpern, das anschließende Aufbringen metallhaltiger Pulver, sowie die thermische Behandlung zur Legierungsbildung und das Trennen der legierten Metallkörper mit einem Verfahren ausgewählt aus der Gruppe Zerteilen, Spanen mit geometrisch bestimmter Schneide und Wasserstrahlschneiden, umfassen. Die vorliegende Erfindung betrifft ferner Verfahren, bei denen sich an das Herstellen der Metallkörperzuschnitte eine Behandlung mit Auslaugmittel anschließt. Entsprechende Verfahren finden, unter Anderem, Anwendung bei der Herstellung von Katalysatoren. Die erfindungsgemäßen Verfahren zeichnen sich neben einer Temperaturführung der thermischen Behandlung, die es ermöglicht die Legierungsbildung auf die oberen Schichten des Metallschaums zu begrenzen, dadurch aus, dass durch den Einsatz der erfindungsgemäßen Trennverfahren zur Herstellung der Metallkörperzuschnitte, Katalysatoren mit besonders vorteilhaften Eigenschaften erhalten werden. Die vorliegende Erfindung betrifft ferner die mit den erfindungsgemäßen Verfahren erhältlichen Metallkörper, die z.B. Anwendung finden als Trag- und Strukturkomponenten sowie in der Katalysatortechnologie, sowie die Verwendung der nach den erfindungsgemäßen Verfahren erhaltenen Katalysatoren für chemische Transformationen.

### Stand der Technik

Im Stand der Technik sind Verfahren zur Herstellung von legierten Metallschaumkörpern bekannt, z.B. aus der WO2019057533A1. Dort werden Metallpulver auf schaumförmige Metallkörper aufgetragen und anschließend thermisch behandelt, so dass Legierungen im Kontaktbereich von schaumförmigem Metallkörper und Metallpulver ausgebildet werden. WO2019057533A1 offenbart eine Vielzahl von Metallen und Metallkombinationen, die für den schaumförmige Metallkörper und das Metallpulver gewählt werden können, dazu allgemeine Angaben für die Durchführung der thermischen Behandlung zur Legierungsbildung sowie einige konkrete Beispiele zur Behandlung von Aluminiumpulver auf Nickelschaum.

Die vorliegende Erfindung unterscheidet sich von der technischen Lehre der WO2019057533A1, unter Anderem, im Hinblick auf die Bedingungen der thermischen Behandlung zur Legierungsbildung und im Hinblick auf die Trennverfahren zur Herstellung der Metallkörperzuschnitte.

Die Bedingungen der thermischen Behandlung zur Legierungsbildung haben Einfluss auf das Ausmaß der Legierungsbildung: Eine thermische Behandlung bei hohen Temperaturen führt zur Legierungsbildung in tieferen Bereichen des Metallkörpers, während eine thermische Behandlung bei niedrigeren Temperaturen nur zur Legierungsbildung in den oberen Bereichen des Metallkörpers führt und unlegierte Bereiche im Inneren des Metallkörpers verbleiben. Da das Verbleiben unlegierter Bereiche im Metallkörper für zahlreiche Anwendungen entsprechender Metallkörper von großer Bedeutung ist, besteht ein Bedürfnis an Verfahren, die dies gewährleisten. Die Verfahren der vorliegenden Erfindung erfüllen dieses Bedürfnis.

Experimentelle Untersuchungen, die im Zusammenhang mit der vorliegenden Erfindung erhoben wurden, zeigen, dass das Trennverfahren, das zur Herstellung der Metallkörperzuschnitte eingesetzt wird, Einfluss auf die Eigenschaften der erhaltenen Katalysatoren hat: Werden ungeeignete Trennverfahren eingesetzt, wirkt sich dies unter Anderem negativ auf die Aktivität der erhaltenen Katalysatoren aus. Da für viele praktische Anwendungen hochaktive Katalysatoren benötigt werden, besteht ein Bedarf an dafür geeigneten Herstellverfahren. Die Verfahren der vorliegenden Erfindung erfüllen dieses Bedürfnis.

### Die vorliegende Erfindung

Die erfindungsgemäßen Verfahren umfassen die folgenden Schritte:
(a) Bereitstellen eines Metallkörpers A,
(b) Aufbringen eines metallhaltigen Pulvers MP auf Metallkörper A, so dass Metallkörper AX erhalten wird,
(c) thermische Behandlung von Metallkörper AX, um Legierungsbildung zu erreichen zwischen den metallischen Anteilen von Metallkörper A und dem metallhaltigen Pulver MP, so dass Metallkörper B erhalten wird,
(d) Trennen von Metallkörper B, so dass Metallkörperzuschnitte MZ erhalten werden,
wobei für das Trennen von Metallkörper B in Schritt (d) ein Trennverfahren aus der folgenden Gruppe eingesetzt wird:
Zerteilen, Spanen mit geometrisch bestimmter Schneide, Wasserstrahlschneiden,
und wobei die höchste Temperatur der thermischen Behandlung von Metallkörper AX im Bereich von 680 bis 715 °C liegt,
und wobei die Gesamtdauer der thermischen Behandlung im Temperaturbereich von 680 bis 715 °C zwischen 5 und 240 Sekunden liegt,
und wobei Metallkörper A aus Nickel, aus Cobalt, aus einer Cobalt-Nickel-Legierung, aus einer Nickel-Eisen-Legierung, aus einer Nickel-Chrom-Legierung oder aus Kupfer besteht, und wobei das metallhaltige Pulver MP pulverförmiges Aluminium, pulverförmiges Chrom, eine pulverförmige Legierung von Aluminium und Chrom, oder Kombinationen davon umfasst,
und wobei der in Schritt (a) verwendete Metallkörper ein Metallschaumkörper, ein Metallnetz, ein Metallgewebe, ein Metallgestrick oder ein Metallgewirk ist.

Die erfindungsgemäßen Verfahren erlauben es, die Legierungsbildung auf die oberen Schichten des Metallkörpers zu begrenzen, so dass unlegierte Bereiche in zentralen Regionen des Metallkörpers verbleiben. Das Vorhandensein dieser unlegierten Bereiche wirkt sich unter anderem auf die chemische und mechanische Stabilität des erhaltenen Metallkörpers aus.

Der in Schritt (a) des erfindungsgemäßen Verfahrens verwendete Metallkörper ist ein Metallschaumkörper, ein Metallnetz, ein Metallgewebe, ein Metallgestrick oder ein Metallgewirk.

In einer bevorzugten Ausführungsform ist der in Schritt (a) verwendete Metallkörper ein Metallschaumkörper.

Der in Schritt (a) des erfindungsgemäßen Verfahrens verwendete Metallkörper besteht aus Nickel, aus Cobalt, aus einer Cobalt-Nickel-Legierung, aus einer Nickel-Eisen-Legierung, aus einer Nickel-Chrom-Legierung oder aus Kupfer.

In einer bevorzugten Ausführungsform besteht der in Schritt (a) verwendete Metallkörper aus Nickel.

In einer bevorzugten Ausführungsform ist der in Schritt (a) verwendete Metallkörper ein Metallschaumkörper aus Nickel.

Der in Schritt (a) des erfindungsgemäßen Verfahrens verwendete Metallkörper kann jede beliebige Form aufweisen, z.B. kubisch, quaderförmig, zylindrisch etc..

In einer bevorzugten Ausführungsform ist der in Schritt (a) verwendete Metallkörper quaderförmig.

In einer bevorzugten Ausführungsform ist der in Schritt (a) verwendete Metallkörper ein quaderförmiger Metallschaumkörper aus Nickel.

Im Zusammenhang mit der vorliegenden Erfindung wird unter einem Metallschaumkörper ein schaumförmiger Metallkörper verstanden. Schaumförmige Metallkörper werden z.B. offenbart in Ullmann's Encyclopedia of Industrial Chemistry, Kapitel "Metallic Foams", veröffentlicht online am 15.07.2012, DOI: 10.1002/14356007.c16_c01.pub2. Geeignet sind prinzipiell Metallschäume mit verschiedenen morphologischen Eigenschaften bezüglich Porengröße und -form, Schichtdicke, Flächendichte, geometrische Oberfläche, Porosität, etc. Bevorzugt weist Metallschaum A eine Dichte im Bereich von 400 bis 1500 g/m², eine Porengröße von 400 bis 3000 µm, bevorzugt von 400 bis 800 µm und eine Dicke im Bereich von 0,5 bis 10 mm, bevorzugt von 1,0 bis 5,0 mm auf. Die Herstellung kann in an sich bekannter Weise erfolgen. Beispielsweise kann ein Schaum aus einem organischen Polymer mit einer Metallkomponente beschichtet werden und dann das Polymer durch Thermolyse entfernt werden, wobei ein Metallschaum erhalten wird. Zum Beschichten mit einem Metall oder einem Vorläufer davon kann der Schaum aus dem organischen Polymer mit einer Lösung oder Suspension, die das Metall enthält, in Kontakt gebracht werden. Dies kann z. B. durch Sprühen oder Tauchen erfolgen. Möglich ist auch eine Abscheidung mittels chemical vapor deposition (CVD). So kann z. B. ein Polyurethanschaum mit einem Metall beschichtet und dann der Polyurethanschaum thermolysiert werden. Ein zur Herstellung von Formkörpern in Form eines Schaums geeigneter Polymerschaum hat vorzugsweise eine Porengröße im Bereich von 100 bis 5000 µm, besonders bevorzugt von 450 bis 4000 µm und insbesondere von 450 bis 3000 µm. Ein geeigneter Polymerschaum hat vorzugsweise eine Schichtdicke von 5 bis 60 mm, besonders bevorzugt von 10 bis 30 mm. Ein geeigneter Polymerschaum hat vorzugsweise ein Raumgewicht von 300 bis 1200 kg/m³. Die spezifische Oberfläche liegt vorzugsweise in einem Bereich von 100 bis 20000 m²/m³, besonders bevorzugt 1000 bis 6000 m²/m³. Die Porosität liegt vorzugsweise in einem Bereich von 0,50 bis 0,95.

In einer bevorzugten Ausführungsform ist der in Schritt (a) verwendete Metallkörper ein Metallschaumkörper der eine spezifische BET-Oberfläche von 100 bis 20.000 m²/m³, bevorzugt von 1.000 bis 6.000 m²/m³ aufweist.

In einer weiteren bevorzugten Ausführungsform ist der in Schritt (a) verwendete Metallkörper ein Metallschaumkörper, der eine Porosität von 0,50 bis 0,95 aufweist.

Das Aufbringen des metallhaltigen Pulvers MP in Schritt (b) des erfindungsgemäßen Verfahrens kann in vielfältiger Weise erfolgen, z. B. indem man Metallkörper A mit einer Zusammensetzung des metallhaltigen Pulvers MP durch Rollen oder Tauchen in Kontakt bringt oder eine Zusammensetzung des metallhaltigen Pulvers MP durch Sprühen, Bestreuen oder Gießen aufträgt. Dazu kann die Zusammensetzung des metallhaltigen Pulvers MP als Suspension oder in Form eines Pulvers vorliegen.

Dabei geht bevorzugt dem eigentlichen Aufbringen der Zusammensetzung des metallhaltigen Pulvers MP auf Metallkörper A in Schritt (b) des erfindungsgemäßen Verfahrens ein vorheriges Imprägnieren von Metallkörper A mit einem Binder voraus. Das Imprägnieren kann beispielweise durch Aufsprühen des Binders oder Eintauchen von Metallkörper A in den Binder erfolgen, ist aber nicht auf diese Möglichkeiten beschränkt. Auf den so vorbereiteten Metallkörper A kann anschließend die Zusammensetzung des metallhaltigen Pulvers MP aufgebracht werden. Alternativ dazu können Binder und Zusammensetzung des metallhaltigen Pulvers MP in einem Schritt aufgebracht werden. Hierfür wird die Zusammensetzung des metallhaltigen Pulvers MP vor dem Aufbringen entweder in flüssigem Binder selbst suspendiert, oder die Zusammensetzung des metallhaltigen Pulvers MP und der Binder werden in einer Hilfsflüssigkeit F suspendiert.

Der Binder ist eine Zusammensetzung, die sich durch thermische Behandlung im Temperaturbereich von 100 bis 400 °C vollständig in gasförmige Produkte überführen lässt, umfassend eine organische Verbindung, die ein Anhaften der Zusammensetzung des metallhaltigen Pulvers MP auf dem Metallkörper begünstigt. Bevorzugt ist die organische Verbindung dabei ausgewählt aus der folgenden Gruppe: Polyethylenemine (PEI), Polyvinylpyrrolidon (PVP), Ethylenglycol, Gemische dieser Verbindungen. Besonders bevorzugt ist PEI. Das Molekulargewicht des Polyethylenemines liegt vorzugsweise in einem Bereich von 10 000 bis 1 300 000 g/mol. Das Molekulargewicht des Polyethylenemines (PEI) liegt vorzugsweise in einem Bereich von 700.000 bis 800.000 g/mol.

Hilfsflüssigkeit F muss geeignet sein, um die Zusammensetzung des metallhaltigen Pulvers MP und den Binder zu suspendieren und sich durch thermische Behandlung im Temperaturbereich von 100 bis 400 °C vollständig in gasförmige Produkte überführen lassen. Bevorzugt wird Hilfsflüssigkeit F ausgewählt aus der folgenden Gruppe: Wasser, Ethylenglycol, PVP und Gemische dieser Verbindungen. Typischerweise wird, wenn Hilfsflüssigkeit verwendet wird, der Binder mit einer Konzentration im Bereich von 1 bis 10 Gew% in Wasser suspendiert, anschließend wird in dieser Suspension die Zusammensetzung des metallhaltigen Pulvers MP suspendiert.

Das in Schritt (b) des erfindungsgemäßen Verfahrens verwendete metallhaltige Pulver MP kann neben pulverförmigen Metallkomponenten auch Zusätze, die zur Steigerung der Rieselfähigkeit oder Wasserbeständigkeit beitragen, enthalten. Derartige Zusätze müssen sich durch thermische Behandlung im Temperaturbereich von 100 bis 400 °C vollständig in gasförmige Produkte überführen lassen. Das in Schritt (b) des erfindungsgemäßen Verfahrens verwendete metallhaltige Pulver MP umfasst eine oder mehr pulverförmige Metallkomponenten, ausgewählt aus der folgenden Gruppe: Pulverförmiges Aluminium, pulverförmiges Chrom, eine pulverförmige Legierung von Aluminium und Chrom, oder Kombinationen davon. Vorzugsweise umfasst das in Schritt (b) des erfindungsgemäßen Verfahrens verwendete metallhaltige Pulver MP als einzige Metallkomponente entweder (i) Aluminiumpulver, oder (ii) Chrompulver, oder (iii) ein Gemisch aus pulverförmigem Aluminium und pulverförmigem Chrom, oder (iv) eine pulverförmige Legierung aus Aluminium und Chrom. Besonders bevorzugt umfasst das in Schritt (b) des erfindungsgemäßen Verfahrens verwendete metallhaltige Pulver MP als einzige Metallkomponente pulverförmiges Aluminium. In einer weiteren bevorzugten Ausführungsform ist das in Schritt (b) des erfindungsgemäßen Verfahrens verwendete metallhaltige Pulver MP pulverförmiges Aluminium. Die Zusammensetzung des metallhaltigen Pulvers MP weist bevorzugt einen Metallkomponentengehalt im Bereich von 80 bis 99,8 Gew% auf. Bevorzugt sind dabei Zusammensetzungen, bei denen die Metallkomponentenpartikel eine Teilchengröße von nicht kleiner 5 µm und nicht größer 200 µm aufweisen. Besonders bevorzugt sind Zusammensetzungen bei denen 95 % der Metallkomponentenpartikel eine Teilchengröße von nicht kleiner 5 µm und nicht größer 75 µm aufweisen. Es kann sein, dass die Zusammensetzung neben der Metallkomponente in elementarer Form, noch Metallkomponente in oxidierter Form enthält. Dieser oxidierte Anteil liegt üblicherweise in Form von oxidischen Verbindungen wie z.B. Oxiden, Hydroxiden und/oder Carbonaten vor. Typischerweise liegt der Masseanteil des oxidierten Anteils im Bereich von 0,05 bis 10 Gew.-% der Gesamtmasse der Metallpulver-Zusammensetzung.

In Schritt (c) des erfindungsgemäßen Verfahrens erfolgt eine thermische Behandlung, um das Ausbilden einer oder mehrerer Legierungen zu erreichen. Es ist eine relativ strikte Temperaturkontrolle notwendig, um die Legierungsbildung auf die oberen Bereiche des Metallschaums zu beschränken und unlegierte Bereiche im Inneren des Metallschaums zu belassen.

In Schritt (c) des erfindungsgemäßen Verfahrens wird Metallkörper AX thermisch behandelt, um Legierungsbildung zu erreichen zwischen den metallischen Anteilen von Metallkörper A und dem metallhaltigen Pulver MP, so dass Metallkörper B erhalten wird, wobei die höchste Temperatur der thermischen Behandlung von Metallkörper AX im Bereich von 680 bis 715 °C liegt, und wobei die Gesamtdauer der thermischen Behandlung im Temperaturbereich von 680 bis 715 °C zwischen 5 und 240 Sekunden liegt.

Die thermische Behandlung umfasst das, üblicherweise stufenweise, Aufheizen des Metallkörpers AX und das anschließende Abkühlen auf Raumtemperatur. Die thermische Behandlung findet unter Inertgas oder unter reduktiven Bedingungen statt. Unter reduktiven Bedingungen ist die Gegenwart eines Gasgemisches, das Wasserstoff und wenigstens ein unter den Reaktionsbedingungen inertes Gas enthält zu verstehen, geeignet ist z. B. ein Gasgemisch, das 50 Vol% N₂ und 50 Vol% H₂ enthält. Als inertes Gas wird vorzugsweise Stickstoff eingesetzt. Das Aufheizen kann z. B. in einem Bandofen erfolgen. Geeignete Aufheizraten liegen im Bereich von 10 bis 200 K/min, bevorzugt 20 bis 180 K/min. Während der thermischen Behandlung wird typischerweise zunächst die Temperatur von Raumtemperatur auf etwa 300 bis 400 °C erhöht und bei dieser Temperatur für einen Zeitraum von etwa 2 bis 30 Minuten Feuchtigkeit, und organische Bestandteile aus der Beschichtung entfernt, anschließend wird die Temperatur bis in den Bereich von 680 bis 715 °C erhöht, und es erfolgt Legierungsbildung zwischen metallischen Anteilen von Metallkörper AX und der Zusammensetzung des metallhaltigen Pulvers MP, anschließend wird durch Kontakt mit Gasumgebung einer Temperatur von ca. 200 °C der Metallkörper abgeschreckt.

Um bei den erfindungsgemäß beteiligten Metallen die Legierungsbildung auf die oberen Bereiche des Metallkörpers zu beschränken, und unlegierte Bereiche im Inneren zu belassen, ist es notwendig, dass die höchste Temperatur der thermischen Behandlung von Metallkörper AX in Schritt (c) im Bereich von 680 bis 715 °C liegt, und dass außerdem die Gesamtdauer der thermischen Behandlung im Temperaturbereich von 680 bis 715 °C zwischen 5 und 240 Sekunden liegt. Bis zu einem gewissen Grad kann zwar die Dauer der thermischen Behandlung die Höhe der höchsten Behandlungstemperatur ausgleichen und umgekehrt, es wird jedoch festgestellt, dass die Häufigkeit der Experimente, bei denen eine Legierungsbildung im oberen Bereich des Metallkörpers bei gleichzeitigem Verbleib unlegierter Bereiche im inneren des Metallschaums erreicht wird, stark abnimmt, wenn bei der Höchsttemperatur der thermischen Behandlung das Temperaturintervall zwischen 680 und 715 °C verlassen wird und/oder die Dauer der thermischen Behandlung im Temperaturintervall zwischen 680 und 715 °C außerhalb des Bereichs von 5 bis 240 Sekunden liegt. Eine zu hohe Höchsttemperatur und/oder ein zu langes Verbleiben des Metallkörpers im Bereich der Höchsttemperatur, führen dazu, dass die Legierungsbildung bis in die tiefsten Schichten des Metallkörpers fortschreitet und keine unlegierten Bereiche verbleiben. Eine zu niedrige Höchsttemperatur und/oder ein zu kurzes Verbleiben des Metallkörpers im Bereich der Höchsttemperatur, führen dazu, dass die Legierungsbildung gar nicht beginnt. Eine Auswahl anderer, als der erfindungsgemäß beteiligten Metalle für Metallkörper A und metallhaltiges Pulver MP, kann ebenfalls dazu führen, dass trotz einer thermischen Behandlung im Temperaturintervall zwischen 680 und 715 °C für eine Dauer von 5 bis 240 Sekunden entweder gar keine Legierungsbildung erhalten wird, oder keine unlegierten Bereiche im Innern des Schaums verbleiben.

In einer bevorzugten Ausführungsform liegt das Verhältnis V der Massen von Metallschaumkörper B zu Metallschaumkörper A, V = m(Metallschaumkörper B) / m(Metallschaumkörper A) im Bereich von 1.1:1 bis 1.5:1. In einer weiteren bevorzugten Ausführungsform liegt das Verhältnis V der Massen von Metallschaumkörper B zu Metallschaumkörper A, V = m(Metallschaumkörper B) / m(Metallschaumkörper A) im Bereich von 1.2:1 bis 1.4:1.

In Schritt (d) des erfindungsgemäßen Verfahrens wird Metallkörper B getrennt, so dass Metallkörperzuschnitte MZ erhalten werden, dabei wird ein Trennverfahren aus der folgenden Gruppe eingesetzt: Zerteilen, Spanen mit geometrisch bestimmter Schneide, Wasserstrahlschneiden.

Experimentelle Untersuchungen, die im Zusammenhang mit der vorliegenden Erfindung durchgeführt wurden, zeigen, dass das Verfahren, das zum Trennen der Metallkörper eingesetzt wird, Einfluss auf die Eigenschaften der damit erhältlichen Katalysatoren hat: Es wurde gefunden, dass durch die Wahl eines Trennverfahrens aus der Gruppe Zerteilen, Spanen mit geometrisch bestimmter Schneide und Wasserstrahlschneiden, Katalysatoren mit besonders vorteilhaften Eigenschaften erhalten werden können.

Geeignete Trennverfahren im Sinne der vorliegenden Erfindung sind in den folgenden Normen definiert:
- Zerteilen gemäß DIN 8588-0, herausgegeben im August 2013, umfassend folgende Verfahren:
   ∘ Scherschneiden
   ∘ Messerschneiden
   ∘ Beißschneiden
   ∘ Spalten
   ∘ Reißen
   ∘ Brechen
- Spanen mit geometrisch bestimmter Schneide gemäß DIN 8589-1 bis 8589-9, herausgegeben im September 2003, umfassend folgende Verfahren:
   ∘ Drehen (DIN 8589-1)
   ∘ Bohren, Senken, Reiben (DIN 8589-2)
   ∘ Fräsen (DIN 8589-3)
   ∘ Hobeln, Stoßen (DIN 8589-4)
   ∘ Räumen (DIN 8589-5)
   ∘ Sägen (DIN 8589-6)
   ∘ Feilen, Raspeln (DIN 8589-7)
   ∘ Bürstspanen (DIN 8589-8)
   ∘ Schaben, Meißeln (DIN 8589-9)
- Wasserstrahlschneiden gemäß SN214001; herausgegeben 2010.

Bevorzugt wird das Verfahren zum Trennen von Metallkörper B aus der folgenden Liste ausgewählt:
- Scherschneiden
- Messerschneiden
- Beißschneiden
- Spalten
- Anritzen und Brechen
- Sägen
- Wasserstrahlschneiden.

Besonders bevorzugt wird Metallkörper B durch Messerschneiden getrennt.

Experimentelle Ergebnisse, die im Zusammenhang mit der vorliegenden Erfindung ermittelt wurden, zeigen ferner, dass die Wahl eines erfindungsgemäßen Trennverfahrens einen besonders vorteilhaften Einfluss auf die Eigenschaften der damit erhältlichen Katalysatoren hat, wenn die Metallkörperzuschnitte MZ ein Verhältnis R = CA / V von Schnittfläche (CA) zu Volumen (V), von R > 0.5 aufweisen.

Dabei wird als Schnittfläche (CA) der Teil der Oberfläche der Metallkörperzuschnitte bezeichnet, der durch das Trennen in Schritt (d) des erfindungsgemäßen Verfahrens erzeugt wird. Hierbei wird angenommen, dass die nicht mit Metall gefüllten Zwischenräume der Metallkörperzuschnitte vollständig mit Metall gefüllt sind, dass also z.B. Schaumporen vollständig ausgefüllt sind, und dass die Oberflächen der Metallkörperzuschnitte, die durch das Trennen in Schritt (d) des erfindungsgemäßen Verfahrens erzeugt werden, in der jeweiligen Schnittebene glatt sind.

V bezeichnet das Volumen der Metallkörperzuschnitte, wobei auch hier angenommen wird, dass die nicht mit Metall gefüllten Zwischenräume der Metallkörperzuschnitte vollständig mit Metall gefüllt sind, dass also z.B. Schaumporen vollständig ausgefüllt sind.

Das Verhältnis R = CA / V von Schnittfläche (CA) zu Volumen (V) besitzt die Dimension 1 / Länge, wird hier aber, der Einfachheit halber, als dimensionslose Zahl angegeben.

In einer bevorzugten Ausführungsform der vorliegenden Erfindung weisen mindestens die Hälfte der im Trennschritt (d) erhaltenen Metallkörperzuschnitte MZ ein Verhältnis R = CA / V von Schnittfläche (CA) zu Volumen (V), von R > 0.5 auf. In einer besonders bevorzugten Ausführungsform der vorliegenden Erfindung weisen mehr als 90 % der im Trennschritt (d) erhaltenen Metallkörperzuschnitte MZ ein Verhältnis R = CA / V von Schnittfläche (CA) zu Volumen (V), von R > 0.5 auf.

In einem weiteren Aspekt umfasst die vorliegende Erfindung ferner Verfahren mit dem folgenden Schritt (e): Behandlung der Metallkörperzuschnitte MZ mit einem Auslaugungsmittel, so dass katalytisch aktive Metallkörper K erhalten werden. Die Behandlung der Metallkörperzuschnitte MZ mit Auslaugmittel dient dazu Metallkomponenten der aufgebrachten Zusammensetzung des metallhaltigen Pulvers MP sowie Legierungen zwischen metallischen Anteilen von Metallschaumkörper und der Zusammensetzung des metallhaltigen Pulvers MP zumindest teilweise aufzulösen und auf diese Weise aus dem Metallkörper zu entfernen. Typischerweise wird aus den Metallkörpern durch die Behandlung mit Auslaugmittel 30 bis 70 Gew% der Gesamtmasse der Metallkomponenten der aufgebrachten Zusammensetzung des metallhaltigen Pulvers MP sowie der Legierungen zwischen metallischen Anteilen von Metallkörper und Zusammensetzung des metallhaltigen Pulvers MP entfernt. Als Auslaugmittel werden typischerweise wässrige basische Lösungen von NaOH, KOH, LiOH oder Gemischen davon verwendet, aber auch andere aus dem Stand der Technik bekannte Auslaugmittel für Raney^{®}-Typ Katalysatoren können verwendet werden. Die Temperatur bei der Behandlung mit Auslaugmittel wird üblicherweise im Bereich von 20 bis 120 °C gehalten. Die Dauer der Behandlung mit Auslaugmittel liegt typischerweise im Bereich von 5 Minuten bis 8 Stunden. Bei geeigneter Wahl der metallischen Komponenten können Metallkörper, die als Ergebnis der Behandlung mit Auslaugmittel erhalten werden, als Katalysatoren eingesetzt werden, wie z.B. offenbart in der WO2019057533A1.

In einer bevorzugten Ausführungsform wird die Behandlung der Metallkörperzuschnitte MZ mit Auslaugmittel für eine Dauer im Bereich von 5 Minuten bis 8 Stunden, bei einer Temperatur im Bereich von 20 bis 120 °C ausgeführt, wobei das Auslaugmittel eine wässrige NaOH-Lösung mit einer NaOH-Konzentration zwischen 1 und 30 Gew% ist.

Die katalytisch aktiven Metallkörper K können in einigen Ausführungsformen in einem weiteren Schritt (f) durch eine Nachdotierung mit weiteren Metallen modifiziert werden, wobei diese Dotierungselemente, auch als Promotorelemente bezeichnet, bevorzugt aus den Übergangsmetallen ausgewählt sind. Zur Nachdotierung werden die Metallkörper mit einer bevorzugt wässrigen Lösung des aufzubringenden Dotierungselements oder der aufzubringenden Dotierungselemente behandelt. Die Dotierlösung hat typischerweise einen pH-Wert ≥ 4, um die Metallkörper nicht zu schädigen. Der Lösung des aufzubringenden Dotierungselementes oder der aufzubringenden Dotierungselemente kann eine chemisch reduktiv wirkende Komponente zugegeben werden, um das gelöste Dotierungselement bzw. die gelösten Dotierungselemente auf dem Metallkörper reduktiv abzuscheiden. Bevorzugte Dotierungselemente zur Modifizierung sind ausgewählt aus der Gruppe bestehend aus Mo, Pt, Pd, Rh, Ru, Cu oder Mischungen davon. Geeignete Verfahren zur Dotierung sind zum Beispiel in WO 2019/057533 auf den Seiten 20 bis 25 beschrieben.

Die in Schritt (e) aktivierten und gegebenenfalls in Schritt (f) nachdotierten Metallkörper können entweder unmittelbar als Katalysatoren eingesetzt werden oder gelagert werden. Um Oxidationsprozesse an der Oberfläche und eine damit eingeschränkte katalytische Wirksamkeit zu verhindern, werden die Metallkörper nach der Aktivierung vorzugsweise unter Wasser gelagert.

In einem weiteren Aspekt umfasst die vorliegende Erfindung ferner Metallkörper erhältlich nach einem der erfindungsgemäßen Verfahren.

Aktivierte und gegebenenfalls dotierte Metallkörper erhältlich nach einem der erfindungsgemäßen Verfahren können als Katalysatoren für zahlreiche katalysierte chemische Reaktionen von insbesondere organischen Verbindungen verwendet werden, wie z.B. Hydrierung, Isomerisierung, Hydratisierung, Hydrogenolyse, reduktive Aminierung, reduktive Alkylierung, Dehydrierung, Oxidation, Dehydrierung und Umlagerung, bevorzugt für Hydrierungsreaktionen. Grundsätzlich sind die erfindungsgemäßen Katalysatoren für alle Hydrierreaktionen, die mit Raney^{®}-Typ Metall-Katalysatoren katalysiert werden, gut geeignet. Bevorzugte Verwendungen der erfindungsgemäßen Katalysatoren sind selektive Hydrierverfahren von Carbonylverbindungen, Olefinen, aromatischen Ringen, Nitrilen und Nitroverbindungen. Konkrete Beispiele sind die Hydrierung von Carbonylgruppen, die Hydrierung von Nitrogruppen zu Aminen, die Hydrierung von Polyolen, die Hydrierung von Nitrilen zu Aminen, z.B. die Hydrierung von Fettnitrilen zu Fettaminen, die Dehydrierung von Alkoholen, die reduktive Alkylierung, die Hydrierung von Olefinen zu Alkanen und die Hydrierung von Aziden zu Aminen. Besonders bevorzugt ist der Einsatz bei der Hydrierung von Carbonylverbindungen.

In einem weiteren Aspekt umfasst die vorliegende Erfindung daher die Verwendung aktivierter und gegebenenfalls dotierter Metallkörper erhältlich nach einem der erfindungsgemäßen Verfahren als Katalysatoren für chemische Transformationen, bevorzugt für chemische Transformationen ausgewählt aus Hydrierung, Isomerisierung, Hydratisierung, Hydrogenolyse, reduktive Aminierung, reduktive Alkylierung, Dehydrierung, Oxidation, Dehydrierung und Umlagerung.

### Beispiele

### 1. Aufbringen von Metallpulver-Zusammensetzungen auf Metallkörper

Auf zwei Metallschaumkörper aus Nickel in flächiger Form mit einem Flächengewicht von 1000 g/m2, und einer durchschnittlichen Porengröße von 580 µm (Hersteller: AATM, 1,9 mm * 300 mm * 860 mm) wurden zunächst je 40 g Binderlösung aufgesprüht (2,5 Gew% Polyethyleneimine in wässriger Lösung). Direkt im Anschluss daran wurde trockenes, pulverförmiges Aluminium (Partikelgröße d99 = 90 µm) im Gemisch mit 3 Gew% pulverförmigem Ceretan^{®}-7080 Wachs (Schmelzpunkt im Bereich von 140 bis 160 °C) auf die Metallkörper aufgebracht (ca. 400 g/m2).

### 2. Aufschmelzen und Wiederverfestigen von Wachskomponenten

Anschließend wurden beide Metallschaumkörper in einem Laborofen auf 160 °C erhitzt und danach wieder auf Raumtemperatur abgekühlt.

### 3. Thermische Behandlung zur Legierungsbildung

Im Anschluss daran wurden beide Metallschaumkörper in einem Bandsinterofen (Hersteller: Sarnes) unter Stickstoffatmosphäre einer thermischen Behandlung zur Legierungsbildung unterworfen. Dabei wurde der Ofen im Verlauf von 15 min von Raumtemperatur auf 715 °C aufgeheizt. Die Gesamtdauer der thermischen Behandlung im Temperaturbereich zwischen 680 °C und 715 °C lag bei 120 s. Danach wurde der Metallschaum durch Kontaktieren mit Stickstoffatmosphäre auf 200 °C abgeschreckt.

### 4. Trennen der Metallkörper

Anschließend wurden die gesinterten Metallschaumkörper in Metallkörperzuschnitte getrennt. Dazu wurde einer der Metallschaumkörper mit einem Laser unter Schutzgas (N₂) geschnitten. Eingesetzt wurde dazu ein Nd:YAG-Laser des Herstellers Trumpf mit einer maximalen Leistung von 5KW. Neben dem Schutzgas (N₂) wurde ein Kühlgas (N₂) eingesetzt, um ein Glühen des Metallschaums zu verhindern. Mit dem Laser wurden 4 mm x 4 mm große Stücke aus dem Metallschaumkörper herausgeschnitten. Als Resultat wurden Metallschaumkörperzuschnitte mit den Abmessungen 4 mm * 4 mm * 1.9 mm (Länge, Breite, Höhe) erhalten.

Der andere Metallschaumkörper wurde mit Messern geschnitten. Dazu wurde zuerst der Metallschaumkörper in einer Richtung mit mehreren rotierenden Messern auf einer Achse geschnitten, dabei entstand eine Kamm-förmige Struktur mit 4 mm breiten Metallkörperstreifen anstelle der Zinken. Anschließend wurden diese Metallkörperstreifen wiederum mit den rotierenden Messern auf einer Achse im Abstand von 4 mm quer geschnitten. Als Resultat wurden Metallschaumkörperzuschnitte mit den Abmessungen 4 mm * 4 mm * 1.9 mm (Länge, Breite, Höhe) erhalten.

### 5. Aktivierung

Die Metallschaumkörperzuschnitte wurden im nächsten Schritt durch Behandlung mit einem Auslaugmittel aktiviert. Hierzu wurden die in den intermetallischen Phasen enthaltenen Aluminiumanteile durch Behandlung mit wäßriger NaOH (10-Gew%) aus den intermetallischen Phasen herausgelöst (Aufheizen der Suspension der Metallschaumkörperzuschnitte in wäßriger NaOH (10 Gew%) von Raumtemperatur auf 55 °C innerhalb von 30 Minuten, anschließend Halten der Temperatur von 55 °C für 30 Minuten). Abschließend wurde die Lauge entfernt, und die Metallschaumkörperzuschnitte wurden ca. eine Stunde lang mit Wasser gewaschen, so dass aktivierte Katalysatoren erhalten wurden.

### 6. Messung der Aktivität

Diese aktivierten Katalysatoren wurden anschließend im Hinblick auf ihre Aktivität untersucht.
Dabei wurden die mittels Laserschneiden erhaltenen Katalysatoren mit den durch Messerschneiden erhaltenen Katalysatoren verglichen.
Getestet wurde im Rührkessel die Hydrierung von 1-Hexen zu n-Hexan. Der Reaktionsverlauf wurde anhand des H₂-Verbauchs verfolgt.

### Bedingungen:

63 g 1-Hexen
250 g Isopropanol
1,5 g Katalysator
7,5 bar H₂
30 °C
1.500 U/min

### Ergebnis:

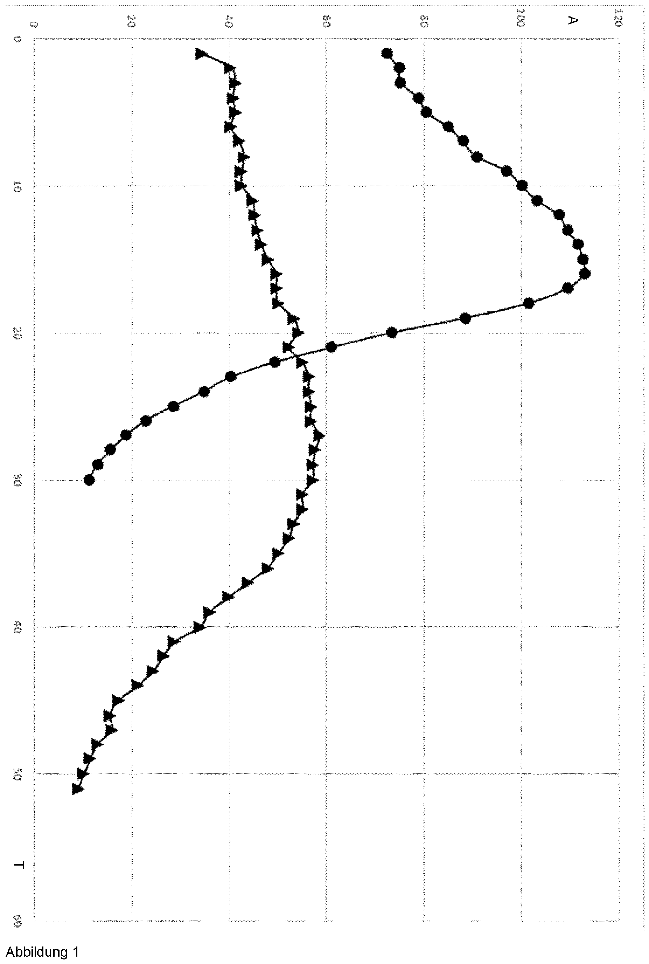

Die Hydrierung verlief bei den durch Messerschneiden erhaltenen Katalysatoren deutlich schneller als bei den durch Laserschneiden erhaltenen Katalysatoren. Die Ergebnisse sind in Abbildung 1 dargestellt: Messergeschnittener Katalysator (Kreise), Lasergeschnittener Katalysator (Dreiecke).
Ordinate: Aktivität in [mI_{H2}/(min*g_{Kat})
Abszisse: Zeit (eine Zeiteinheit entspricht 5 min)

### 7. Weitere Ergebnisse:

Experimente mit Metallschaumkörpern aus Cobalt, die ansonsten den oben dargestellten Experimenten mit Metallschaumkörpern aus Nickel entsprachen, ergaben ein qualitativ gleichlautendes Ergebnis: Die Hydrierung verlief bei den durch Messerschneiden erhaltenen Katalysatoren deutlich schneller als bei den durch Laserschneiden erhaltenen Katalysatoren.

## Patentansprüche

1. Verfahren umfassend die folgenden Schritte:
(a) Bereitstellen eines Metallkörpers A,
(b) Aufbringen eines metallhaltigen Pulvers MP auf Metallkörper A, so dass Metallkörper AX erhalten wird,
(c) thermische Behandlung von Metallkörper AX, um Legierungsbildung zu erreichen zwischen den metallischen Anteilen von Metallkörper A und dem metallhaltigen Pulver MP, so dass Metallkörper B erhalten wird,
(d) Trennen von Metallkörper B, so dass Metallkörperzuschnitte MZ erhalten werden,
wobei für das Trennen von Metallkörper B in Schritt (d) ein Trennverfahren aus der folgenden Gruppe eingesetzt wird:
Zerteilen, Spanen mit geometrisch bestimmter Schneide, Wasserstrahlschneiden,
und wobei die höchste Temperatur der thermischen Behandlung von Metallkörper AX im Bereich von 680 bis 715 °C liegt,
und wobei die Gesamtdauer der thermischen Behandlung im Temperaturbereich von 680 bis 715 °C zwischen 5 und 240 Sekunden liegt,
und wobei Metallkörper A aus Nickel, aus Cobalt, aus einer Cobalt-Nickel-Legierung, aus einer Nickel-Eisen-Legierung, aus einer Nickel-Chrom-Legierung oder aus Kupfer besteht,
und wobei das metallhaltige Pulver MP pulverförmiges Aluminium, pulverförmiges Chrom, eine pulverförmige Legierung von Aluminium und Chrom, oder Kombinationen davon umfasst,
und wobei der in Schritt (a) verwendete Metallkörper ein Metallschaumkörper, ein Metallnetz, ein Metallgewebe, ein Metallgestrick oder ein Metallgewirk ist.

2. Verfahren gemäß Anspruch 1, wobei Metallkörper A aus Nickel oder Cobalt besteht.

3. Verfahren gemäß einem der Ansprüche 1 bis 2, wobei das metallhaltige Pulver MP pulverförmiges Aluminium ist.

4. Verfahren gemäß einem der Ansprüche 1 bis 3, wobei das Verfahren für das Trennen von Metallkörper B aus der folgenden Liste ausgewählt wird: Scherschneiden, Messerschneiden, Beißschneiden, Spalten, Anritzen und Brechen, Sägen, Wasserstrahlschneiden.

5. Verfahren gemäß einem der Ansprüche 1 bis 4, wobei der in Schritt (a) verwendete Metallkörper ein Metallschaumkörper ist.

6. Verfahren gemäß Ansprüche 5, wobei der in Schritt (a) verwendete Metallschaumkörper eine spezifische BET-Oberfläche von 100 bis 20.000 m²/m³, bevorzugt von 1.000 bis 6.000 m²/m³ aufweist.

7. Verfahren gemäß einem der Ansprüche 5 bis 6, wobei der in Schritt (a) verwendete Metallschaumkörper eine Porosität von 0,50 bis 0,95 aufweist.

8. Verfahren gemäß einem der Ansprüche 1 bis 7, bei dem mindestens die Hälfte der erhaltenen Metallkörperzuschnitte MZ ein Verhältnis R = CA / V von Schnittfläche (CA) zu Volumen (V), von R > 0.5 aufweisen.

9. Verfahren gemäß einem der Ansprüche 1 bis 8, ferner umfassend den folgenden Schritt:
(e) Behandlung der Metallkörperzuschnitte MZ mit einem Auslaugungsmittel, so dass katalytisch aktive Metallkörper K erhalten werden.

10. Verfahren gemäß Anspruch 9, wobei die Behandlung der Metallkörperzuschnitte MZ mit Auslaugungsmittel für eine Dauer im Bereich von 5 Minuten bis 8 Stunden, bei einer Temperatur im Bereich von 20 bis 120 °C ausgeführt wird, und wobei das Auslaugungsmittel eine wässrige NaOH-Lösung mit einer NaOH-Konzentration zwischen 1 und 30 Gew% ist.

11. Verfahren gemäß einem der Ansprüche 9 bis 10, ferner umfassend den folgenden Schritt:
(f) Nachdotieren der katalytisch aktiven Metallkörper K mit einem Promotorelement, ausgewählt aus Mo, Pt, Pd, Rh, Ru, Cu oder Mischungen davon.

12. Metallkörperzuschnitte MZ, erhältlich durch ein Verfahren gemäß einem der Ansprüche 1 bis 8.

13. Katalytisch aktive Metallkörper K, erhältlich durch ein Verfahren gemäß einem der Ansprüche 9 bis 11.

14. Verwendung von katalytisch aktiven Metallkörpern K gemäß Anspruch 13, für chemische Transformationen.

15. Verwendung gemäß Anspruch 14, wobei die chemische Transformation ausgewählt ist aus Hydrierung, Isomerisierung, Hydratisierung, Hydrogenolyse, reduktive Aminierung, reduktive Alkylierung, Dehydrierung, Oxidation und Umlagerung.
